# EUROPEAN PATENT SPECIFICATION

(11) **EP 4 062 546 B1**
(45) Date of publication and mention of the grant of the patent: **29.11.2023**
(21) Application number: 20793617.0
(22) Date of filing: 15.10.2020
(51) Int. Cl.: H04B 7/06, H04W 72/04

(54) **METHODS FOR INTERFERENCE COORDINATION OF A SIDE-LINK AND RELATED NETWORK NODE, WIRELESS NODES AND USER EQUIPMENT**
VERFAHREN ZUR SIDELINK-INTERFERENZKOORDINATION UND ZUGEHÖRIGER NETZWERKKNOTEN, DRAHTLOSER KNOTEN UND BENUTZERGERÄT
PROCÉDÉS DE COORDINATION D'INTERFÉRENCE D'UNE LIAISON LATÉRALE ET NOEUD DE RÉSEAU ASSOCIÉ, NOEUDS SANS FIL ET ÉQUIPEMENT UTILISATEUR

(30) Priority: 18.11.2019 SE 1951329
(43) Date of publication of application: 28.09.2022
(73) Proprietor: Sony Group Corporation, Tokyo 108-0075 (JP); Sony Europe B.V., Weybridge, Surrey KT13 0XW (GB)
(72) Inventor: YING, Zhinong, 226 48 Lund (SE); ZANDER, Olof, 221 88 Lund (SE); BENGTSSON, Erik, 221 88 Lund (SE); RUSEK, Fredrik, 241 35 Eslöv (SE); ZHAO, Kun, 212 19 Malmö (SE); FLORDELIS, Jose, 22472 Lund (SE)
(74) Representative: Aera A/S
(86) International application number: PCT/EP2020/079117
(87) International publication number: WO 2021/099040

(56) References cited:
- US-A1- 2018 199 212
- HUAWEI ET AL: "Beamforming for V2X sidelink for FR1 and FR2", 3GPP DRAFT; R1-1900862, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Taipei; 20190121 - 20190125 11 January 2019 (2019-01-11), XP051576400, Retrieved from the Internet: URL:http://www.3gpp.org/ftp/tsg%5Fran/WG1% 5FRL1/TSGR1%5FAH/NR%5FAH%5F1901/Docs/R1%2D 1900862%2Ezip [retrieved on 2019-01-11]
- VIVO: "NR sidelink synchronization mechanism", 3GPP DRAFT; R1-1900119_NR SIDELINK SYNCHRONIZATION MECHANISM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Taipei; 20190121 - 20190125 20 January 2019 (2019-01-20), XP051593045, Retrieved from the Internet: URL:http://www.3gpp.org/ftp/Meetings%5F3GP P%5FSYNC/RAN1/Docs/R1%2D1900119%2Ezip [retrieved on 2019-01-20]
- SONY: "Views on beam management for NR", 3GPP DRAFT; R1-1611541, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno,USA; 20161114 - 20161118 13 November 2016 (2016-11-13), XP051175518, Retrieved from the Internet: URL:http://www.3gpp.org/ftp/Meetings_3GPP_ SYNC/RAN1/Docs/ [retrieved on 2016-11-13]

## Description

The present disclosure relates to methods for interference coordination of a side-link communication and related network node, wireless nodes and user equipment (UE).

### BACKGROUND

Device-to-Device (D2D) communication, which comprises but is not limited to Vehicle-to-everything (V2X) communication, has received increased attention lately by the 3^{rd} Generation Partnership Project (3GPP) for a Fifth Generation (5G) New Radio (NR) standard. Currently, the scope of V2X communication in 3GPP includes both frequency ranges FR1 and FR2. However, beam management, which is critical for FR2 communication systems, has not been discussed within the context of D2D. Here, beam management refers to an initial beam pair establishment.

D2D can however not use the same beam management as a communication between a base station, such as a Next Generation NodeB (gNB), and a UE, since the beam selection may cause interference to the gNB and/or other UEs which would reduce the performance of the gNB and/or other UEs.

The document US 2018/199212 A1 (LIN YICHENG [CA] ET AL) 12 July 2018 (2018-07-12) discloses a scheme for interference coordination for beam sweeping. According to the teachings of this document, a network node sends to a User Equipment (UE) information allowing to perform a beam sweep for establishing a beam pair within a resource set. The network node also ensures that other wireless nodes in the network, "bystanders" to the first communication, occupy a different set of resources than those allowed for the beam sweep. The network node then receives beam selection information from the UE.

The document by HUAWEI ET AL: "Beamforming for V2X sidelink for FR1 and FR2";3GPP DRAFT; R1-1900862; Taipei, 11 January 2019 (2019-01-11); XP051576400, raises the issue of defining the signaling required by beam sweeping for side-link communication.

### SUMMARY

Accordingly, there is a need for devices and methods for interference coordination of a side-link which mitigate, alleviate or address the shortcomings existing and provide an improved procedure for setting up a side-link communication and which reduces the interference experienced by other nodes caused by the side-link communication. Disclosed is a method, performed by a network node, for interference coordination for side-link communication between a first and a second UE. The method comprises sending, to the first and second UE, information allowing the first and the second UE to perform a side-link beam sweep for establishing a side-link beam pair in a set of resources. The method comprises sending, to other wireless nodes in the network, wherein the other wireless nodes are bystanders to the side-link communication, information indicating that a potentially interfering transmission is to occur in the set of resources allowed for the side-link beam sweep of the first and the second UE. The method comprises receiving, from the first and/or the second UE, beam pair information indicative of one or more beam pairs intended for side-link communication between the first and the second UE. The method comprises monitoring for interference information indicating a level of interference experienced by one or more of the other wireless nodes due to transmission over at least one beam of the one or more beam pairs intended for side-link communication. The method comprises scheduling resources for the side-link communication based on the monitored interference information.

Further, a network node is provided, the network node comprising a memory circuitry, a processor circuitry, and a wireless interface. The network node being configured to perform a method as disclosed herein for the network node.

Disclosed is a method performed in a wireless node of a wireless communication system, for enabling interference coordination for side-link communication between a first and a second UE. The first and the second UE are to perform a side-link beam sweep in a set of resources. The wireless node is a bystander to the side-link communication. The method comprises receiving, from a radio network node, information indicating that a potentially interfering transmission is to occur in the set of resources. The method comprises measuring interference experienced from the set of resources indicated in the received information. The method comprises upon measuring interference in one or more of the indicated resources, sending, to an entity coordinating the side-link communication, interference information indicating a level of interference experienced by the wireless node.

Further, a wireless node is provided, the wireless node comprising a memory circuitry, a processor circuitry, and a wireless interface. The wireless node being configured to perform a method as disclosed herein for the wireless node.

Disclosed is a method performed in a first UE, for interference coordination for side-link communication between the first and a second UE. The method comprises receiving, from a radio network node, information allowing the first and the second UE to perform a side-link beam sweep for establishing a side-link beam pair in certain resources. The method comprises performing a side-link beam sweep, using one or more transmit beams, in the resources received from the radio network node. The method comprises monitoring for one or more responses, received via respective response beams, from the second UE.

The method comprises determining upon detecting one or more responses from the second UE, one or more candidate beam pairs intended for side-link communication, based on the detected response on one or more response beams, and sending, to the radio network node, an indication of the one or more candidate beam pairs intended for the side-link communication.

Further, a first UE is provided, the first UE comprising a memory circuitry, a processor circuitry, and a wireless interface. The first UE being configured to perform a method as disclosed herein for the first UE.

Disclosed is a method, performed in a second UE, for interference coordination for side-link communication between the second UE and a first UE. The method comprises receiving, from a radio network node, information allowing the first and the second UE to perform a side-link beam sweep for establishing the side-link beam pair in certain resources. The method comprises listening, using one or more receive beams, to a side-link beam sweep from the first UE, based on the received information. The method comprises determining one or more candidate beam pairs for the side-link communication.

Further, a second UE is provided, the second UE comprising a memory circuitry, a processor circuitry, and a wireless interface. The second UE being configured to perform a method as disclosed herein for the second UE.

It is an advantage of the present disclosure that the interference experienced by other nodes is measured and taken into account when determining the resources to be allocated for side-link communication between two UEs. By taking interference information from other wireless nodes experiencing interference from a side-link beam sweep into account when granting resources for side-link communication, resources can be granted which reduces the interference experienced by other wireless nodes in the communications network and thereby an overall increase in performance of the communications network may be increased. The resource grant may e.g. comprise which beams that can be used for side-link transmission. That is, the network node may deny side-link with the best beam pair, from the perspective of the first and second UE. Instead the network node may grant side-link communication for another beam pair, being less favourable from the perspective of the two UEs but causing less interference at the other wireless nodes.

### BRIEF DESCRIPTION OF THE DRAWINGS

The above and other features and advantages of the present disclosure will become readily apparent to those skilled in the art by the following detailed description of exemplary embodiments thereof with reference to the attached drawings, in which:
Fig. 1 is a diagram illustrating an exemplary wireless communication system comprising an exemplary network node, an exemplary wireless device and exemplary wireless nodes according to this disclosure,
Fig. 2 is a flow-chart illustrating an exemplary method, performed in a network node of a wireless communication system, for interference coordination for a side-link communication between a first and a second UE according to this disclosure,
Fig. 3 is a flow-chart illustrating an exemplary method, performed in a wireless node of a wireless communication system, for interference coordination for a side-link communication between a first and a second UE according to this disclosure,
Fig. 4 is a flow-chart illustrating an exemplary method, performed in a first UE, for interference coordination for a side-link communication between a first and a second UE according to this disclosure,
Fig. 5 is a flow-chart illustrating an exemplary method, performed in a second UE, for interference coordination for a side-link communication between a first and a second UE according to this disclosure,
Fig. 6 is a block diagram illustrating an exemplary network node according to this disclosure,
Fig. 7 is a block diagram illustrating an exemplary wireless node according to this disclosure,
Fig. 8 is a block diagram illustrating an exemplary first UE according to this disclosure,
Fig. 9 is a block diagram illustrating an exemplary second UE according to this disclosure,
Fig. 10 is a signalling diagram illustrating an exemplary procedure for interference coordination for side-link communication according to a first exemplary embodiment herein, and
Fig. 11 is a signalling diagram illustrating an exemplary procedure for interference coordination for side-link communication according to a second exemplary embodiment herein.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The figures are schematic and simplified for clarity, and they merely show details which aid understanding the disclosure, while other details have been left out. Throughout, the same reference numerals are used for identical or corresponding parts.

Embodiments herein provide an extended beam management protocol for controlling and/or minimizing interference from a D2D communication. The D2D communication may herein also be referred to as a side-link communication. A solution is proposed which may use a protocol based on current 3GPP NR system architecture in licensed frequency bands for mm-wave for avoiding strong interference from FR2 D2D communication.

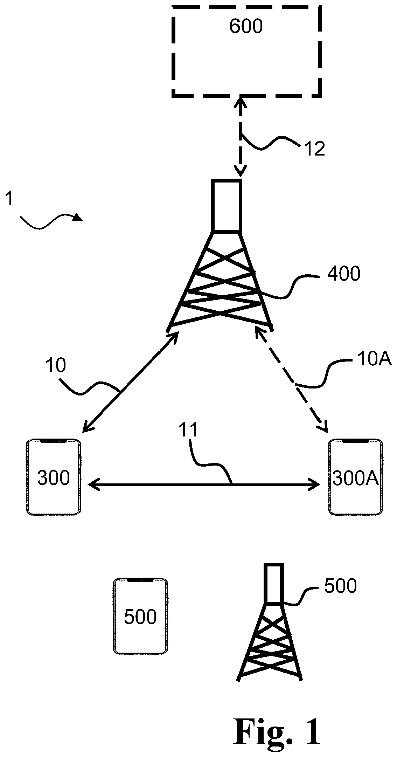

Fig. 1 is a diagram illustrating an exemplary wireless communication system 1 comprising an exemplary network node 400 and an exemplary wireless device 300 according to this disclosure.

As discussed in detail herein, the present disclosure relates to a wireless communication system 1 comprising a cellular system, e.g. a 3GPP wireless communication system. The wireless communication system 1 comprises a wireless device 300 and/or a network node 400.

A network node disclosed herein refers to a radio access network (RAN) node operating in the radio access network, such as a base station, an evolved Node B (eNB), or a Next Generation NodeB (gNB). In one or more examples, the RAN node is a functional unit which may be distributed in several physical units.

The wireless communication system 1 described herein may comprise at least two wireless devices, such as a first UE 300 and a second UE 300A, and/or one or more network nodes 400, such as one or more of: a base station, an eNB, a gNB and/or an access point.

A wireless device may refer to a mobile device and/or a UE.

The first and the second UEs 300, 300A may be configured to communicate with the network node 400 via a wireless link (or radio access link) 10, 10A and may communicate with each other via a side-link 11. In the system architecture as illustrated in Fig. 1, the two UEs 300, 300A may intend to communicate with each other over the side-link, using e.g. mm-wave at a licensed band, without having to send the communication via the network node 400, such as the gNB. The side link communication may be performed in the same frequency ranges as the network node 400 communicates with the UEs 300, 300A in or may be performed in frequency ranges not supported by the network node 400.

The wireless communication system 1 may further comprise one or more wireless nodes 500 being bystanders to the side-link communication between the first UE 300 and the second UE 300A. Being bystanders shall herein be interpreted as the wireless nodes not participating in but potentially being affected by the side-link communication. Being affected may be seen as experiencing interference from the side-link communication. The wireless nodes 500 may be one or more of a UE and/or a network node, such as a gNB.

The embodiments provided herein introduce a communication method in which wireless nodes in a communication system being bystanders to the D2D communication, which may also be referred to as side-link communication, between two wireless devices, such as UEs, are made aware that a side-link operation will take place. The wireless nodes being bystanders, which may also be referred to as sniffers, are wireless nodes not participating in the side-link communication. The sniffers are also made aware, by the network node, of resources that will be used for the side-link operation and may use this information to detect if the side-link operation may harm their communication due to interference from the side-link operation. The wireless nodes may then influence the side-link communication between the two wireless devices by sending a report of the detected interference to the network node or to one or more of the two UEs participating in the side-link communication. The information may be taken into account by the network node and/or the one or more UEs when determining the resources, such as beams or beam pairs, to be used for the side-link communication. This has the effect that the interference in the communications network, as experienced by the other nodes, can be effectively reduced through a beam selection granted by the network node, based on the interference experienced by the wireless nodes, between the wireless devices intending to set-up a side-link communication.

The two UEs may have identified a need and/or a desire to communicate with each other and may have informed the network node about this, e.g. by sending a request for resources to the network node. Since the two UEs have not established a beam pair, such as a side-link beam pair with each other, the UEs have to identify this need/desire via the network node. The UEs may sometimes be connected to different network nodes, e.g. when the two UEs are located on the edge of their respective cells and close to each other. In such a case, the respective network nodes may coordinate this request for resources between each other.

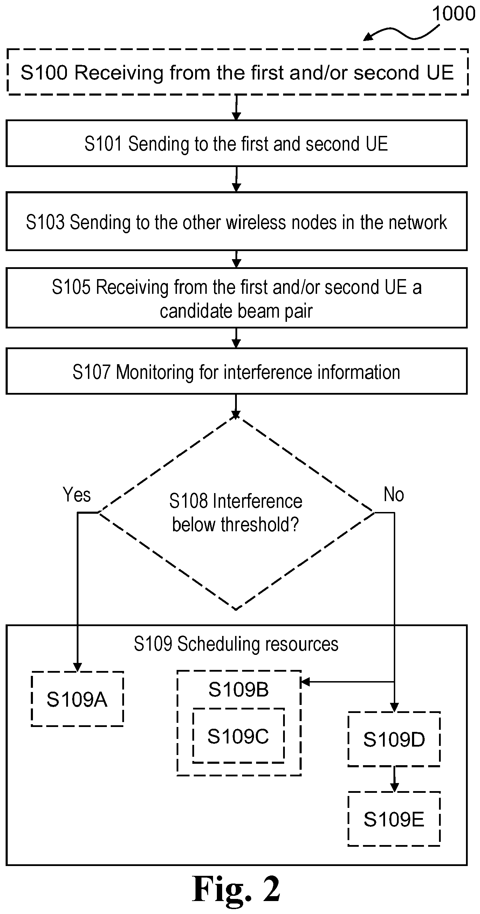

Fig. 2 shows a flow diagram of an exemplary method 100, performed by a network node, such as a radio network node (e.g. a gNB), for interference coordination for side-link communication between a first and a second UE according to the disclosure, which disclosure relates to side-link beam transmissions. The method 100 comprises sending S101, to the first and second UE, information allowing the first and the second UE to perform a side-link beam sweep for establishing a side-link beam pair in a set of resources. The information may be sent using control signalling. In some embodiments the control signalling may sent to the first and second UE using a Sidelink Control Information (SCI) message over e.g. a Physical Sidelink Control Channel (PSCCH), or via a DCI message sent over a Physical Downlink Control Channel (PDCCH). The resources for the side-link and/or the side-link beam sweep may typically be allocated by the radio network node.

In one or more example methods, the information allowing the first and the second UE to perform a side-link beam sweep for establishing the side-link beam pair may comprise, such as may indicate, a set of resource elements (REs) that the first and the second UE may use to establish the beam pair, such as to perform the side-link beam sweep. The set of resources may comprise L sub-blocks each sub-block comprising K resource elements. In one example, the information allowing the first and the second UE to perform the side-link beam sweep may comprise information indicating that the number of sub-blocks is L=9, i.e. that nine sub-blocks have been granted for performing the side-link beam sweep for setting up the side-link communication between the first and the second UE. The information may further comprise an indication of a power and/or a beam space that may be used for the beam sweep. The resources may be defined in a time and frequency domain or in a doppler and delay domain. The network node may decide how the UEs are to use the granted resources, e.g. how many transmit beams the UEs may use to transmit in the resources of the granted sub-blocks. This may however also be up to UE implementation, e.g. the UE may determine to transmit using three transmit beams and thus that the nine granted sub-blocks shall be shared by the three beams. In a scenario where nine resources are shared by three transmit beams, each transmit beam may be repeated three times. If the first UE has chosen N=3 such that each transmit beam is repeated three times. Consequently, there are three transmit beams (Tx1 - Tx3). Since N=3, the second UE choses to listen with L/N=3 beams (Rx1 - Rx3) on each transmit beam.

In addition, the network node may also provide a conditional grant to the first and second UEs. The conditional grant allows the first and second UE to coordinate the side-link communication and to (autonomously) set up the side-link communication if a condition is fulfilled. The condition may e.g. indicate under what circumstances the UEs are allowed to establish the side-link, e.g. that the UEs may set up the side-link if the interference experienced by the other wireless nodes is below a threshold.

The method 100 comprises sending S103, to other wireless nodes in the network, wherein the other wireless nodes are bystanders to the side-link communication, information indicating that a potentially interfering transmission is to occur in the set of resources allowed for the side-link beam sweep of the first and the second UE. In other words, the network node informs other nodes that will potentially be affected by the side-link communication, about the beam sweep that is to occur for establishing the side-link, so that they may be part of the process of determining the beam pair for the side-link communication. The information indicating that a potentially interfering transmission is to occur may be sent to the other nodes using a broadcast transmission. In some embodiments the broadcast transmission may be broadcasted in a Broadcast Control Channel (BCCH) message, such as a message transmitted over a Physical Broadcast Control Channel (PBCCH).

The first and the second UE perform the beam sweep based on the received information from the network node and determine one or more candidate beam pairs which the UEs intend to use for the side-link communication, in accordance with step 303, 309, 403 and 407 as described in the following for the first and the second UE.

The method 100 comprises receiving S105, from the first and/or the second UE, beam pair information indicative of one or more beam pairs intended for side-link communication between the first and the second UE. The beam pairs intended for side-link communication are beam pairs which the first and/or the second UE has/have determined, based on measurements, to be the one or more beam pairs that are most suitable, from the UEs perspective, for the side-link. The beams intended for side-link communication by the UEs, must however not correspond to the actual beam pair selected for side-link communication after interference experienced by the other wireless nodes has been considered. The information indicative of the one or more beam pairs for side-link communication may comprise an indication of the beam pair, an amount of data transmitted over the side-link and/or a power request for the side-link.

Based on the information indicating that a potentially interfering transmission is to occur, the other wireless nodes may perform a measurement to determine if they are experiencing interference from the beam sweep performed by the first and second UEs. The other wireless nodes may upon detecting interference send interference information to the network node, indicating that the one or more other wireless nodes have experienced interference.

The method 100 comprises monitoring S107 for interference information indicating a level of interference experienced by one or more of the other wireless nodes due to transmission over at least one beam of the one or more beam pairs intended for side-link communication. The network node monitors for interference information to find out if one or more other nodes were affected by the side-link beam sweep performed by the first and second UE. The monitoring may be performed by listening for a message from the one or more other wireless nodes indicating an experienced interference. The interference information may be transmitted to the network node over a Physical Uplink Control Channel (PUCCH) or via a Physical Uplink Shared Channel (PUSCH). Hence, the network node may monitor the PUCCH and/or the PUSCH for a message comprising the interference information from the other wireless nodes.

The method 100 may, upon detecting interference information, comprise determining S108, based on the interference information, whether the interference experienced is below a threshold. The threshold may be variable and may depend on the nature of the traffic on the other wireless nodes not participating in the side-link but potentially being interfered. For example, low-latency, mission-critical services with low tolerance to interference might require a low threshold, while multimedia-streaming traffic may have a higher threshold since this type of traffic is less sensitive to high levels of side-link interference. The other wireless nodes susceptible to side-link interference may communicate acceptable levels of interference.

The method 100 comprises scheduling S109 resources for the side-link communication based on the monitored interference information. In other words, if the network node is informed of, e.g. by receiving a message from one or more of the other nodes, and/or determines that another wireless node is negatively affected, such as experiences interference, by the side-link beam sweep, the network node may adapt the scheduling of the side-link communication between the first and the second UEs, such that the interference is removed or mitigated. The scheduling may e.g. comprise allocating resources corresponding to the one or more candidate beam pairs indicated by the first and/or second UE with a limited transmit power for reducing the interference experienced by the other wireless nodes or allocating a different set of resources than the resources corresponding to the candidate beam pairs. The different set of resources may be resources for which the other wireless nodes have indicate that they experience less or no interference. The other wireless nodes may indicate no interference by e.g. not sending any interference information to the network node. If no other wireless nodes are affected by the side-link beam sweep, the network node may schedule the resources corresponding to the one or more candidate beam pairs as indicated by the first and/or second UE. In one or more example methods, upon determining that the interference experienced is below the threshold, the scheduling S109 may comprise allocating S109A resources to the first and second UE for side-link communication with the beam pairs intended for side-link communication.

In one or more example methods, upon determining that the interference experienced is not below the threshold, the scheduling S109 may comprise refraining S109B from allocating resources for the candidate beam pairs intended for side-link communication.

In one or more example methods, the refraining S109B may further comprise sending S109C, to the first and the second UE, information allowing the first and the second UE to perform a side-link beam sweep for establishing a side-link beam pair in a different set of resources. The different set of resources may overlap with the resources corresponding to the candidate beam pairs, but may be restricted to only using a subset of the resources corresponding to the candidate beam pairs, such as a subset of a frequency and/or time range of the resources corresponding to the candidate beam pairs. The network node may e.g. use Spatial Division Multiplexing (SDM), Frequency Division Multiplexing (FDM), Code Division Multiplexing (CDM) or Time Division Multiplexing (TDM) to multiplex the side-link transmission with other traffic, such that the interference is reduced to a level acceptable by the other wireless nodes. In some exemplary embodiments, FDM, CDM and/or TDM may be used if SDM is not sufficient for reducing the interference to an acceptable level.

In one or more example methods, upon determining that the interference experienced is not below the threshold, the scheduling S109 comprises determining S109D, based on the interference information, a maximum transmit power allowable for the side-link. In one or more example methods, upon determining that the interference experienced is not below the threshold, the scheduling S109 comprises granting S109E resources for the side-link communication under the condition that the maximum transmit power is not exceeded. By limiting the maximum transmit power, e.g. by performing a power back-off, the resources where the other nodes experience interference can still be used for side-link transmission, since the experienced interference can be reduced by means of the transmit power so that the interference is below the threshold.

In one or more example methods, the method 100 may comprise receiving S100, from the first and/or the second UE, a request for establishing a side-link beam pair.

In one or more example methods, the information allowing the first and the second UE to perform a side-link beam sweep for establishing the side-link beam pair further comprises a conditional resource grant for side-link communication. In one or more example methods, the conditional resource grant indicates that the resource is granted for side-link communication for beam pairs for which the interference experienced by the other wireless nodes is below a predetermined threshold, such as an interference threshold.

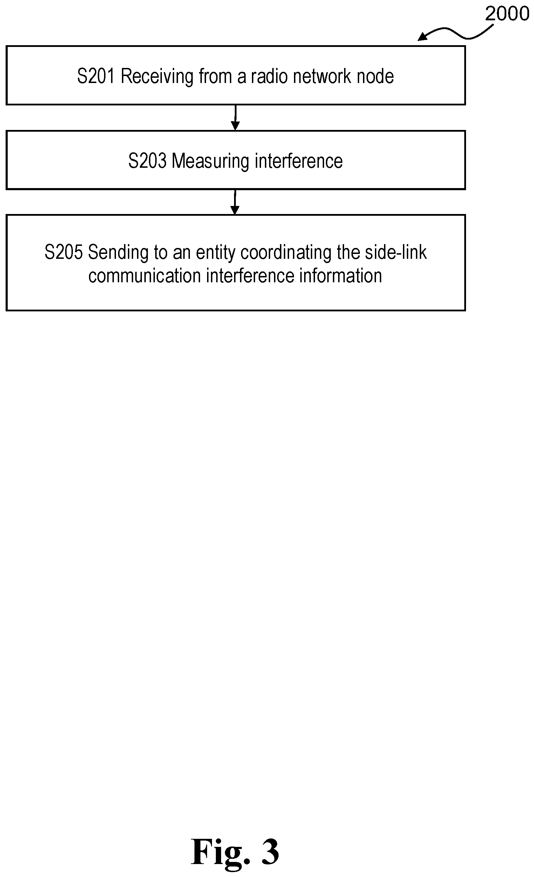

Fig. 3 is a flow-chart illustrating an exemplary method 2000, performed in a wireless node of a wireless communication system, for enabling interference coordination for side-link communication between a first UE and a second UE according to this disclosure. The first UE and the second UE are to perform a side-link beam sweep in a set of resources. The wireless node is a bystander to the side-link communication. The first UE may herein be referred to as a side-link initiating device. The second UE may herein be referred to as a side-link receiving device.

The method 2000 comprises receiving S201, from a network node, information indicating that a potentially interfering transmission is to occur in the set of resources. The information indicating that a potentially interfering transmission is to occur, may e.g. be received via a broadcasted message transmitted from the network node. The resources may be indicated by means of a time and frequency of the resources or may be default resources. The default resources may be a set of (periodically occurring) resources that are used exclusively for monitoring interference during beam-sweeps of side-link UEs. All wireless nodes may be required to monitor these default resources and to report the level of interference experienced in the default resources. In one or more example methods, the information indicating that a potentially interfering transmission will occur comprises a set of resource elements. In one or more example methods, the set of resource elements comprises L sub-blocks, each sub-block comprising K resource elements. The information may further comprise an indication of a power and/or a beam space that may be used for the beam sweep. The resources may be defined in a time and frequency domain or in a doppler and delay domain. The potentially interfering transmission is typically a beam sweep or signals transmitted between the first and second UE for establishing the beam pair.

The method 2000 comprises measuring S203 interference experienced from the set of resources indicated in the received information. The interference, such as the interference caused by the beam sweep for establishing side-link communication, may be measured by measuring a Reference Signal Received Power (RSRP) or a Signal-to-Interference-plus-Noise Ratio (SINR) and may be indicated in decibel (dB) in the resources indicated by the set of resources.

The method 2000 comprises upon measuring interference in one or more of the indicated resources, sending S205, to an entity coordinating the side-link communication, interference information indicating a level of interference experienced by the wireless node. In one or more example methods, the entity coordinating the side-link communication is the network node, the first UE and/or the second UE. The interference information may only be sent upon observing and/or detecting a non-tolerable interference level, such as an interference level exceeding the predetermined threshold.

In one or more example methods, the information indicating the potentially interfering transmission comprises time and/or frequency of the certain resource in which the potentially interfering transmission is to occur.

In one or more example methods, the interference information comprises an indication of the resources in which the interference occurred. The resources in which the interference occurred are the resources corresponding to the beams transmitted during the beam sweep that caused interference to the other wireless nodes. The resource where the interference occurred may be indicated by indicating the time and the frequency of the corresponding resource.

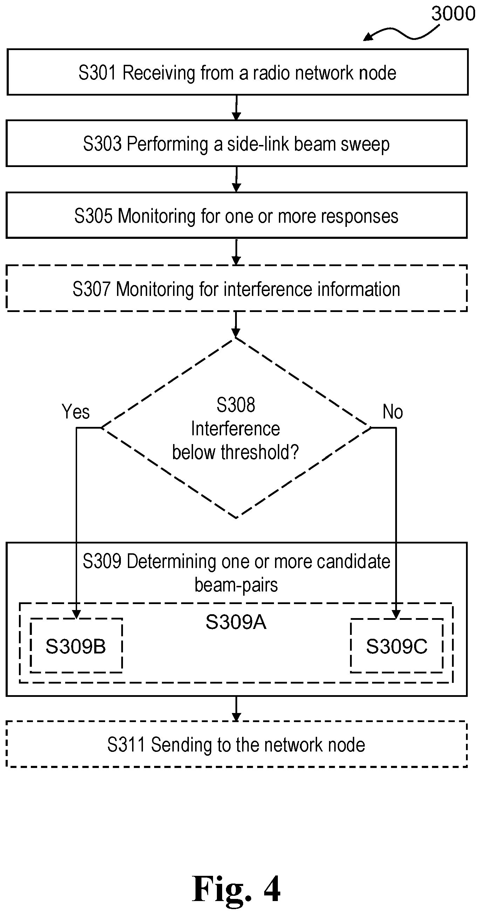

Fig. 4 is a flow-chart illustrating an exemplary method 3000, performed in a first UE, for interference coordination for side-link communication between the first and a second UE according to this disclosure.

The method 3000 comprises receiving S301, from a network node, information allowing the first and the second UE to perform a side-link beam sweep for establishing a side-link beam pair in certain resources. The information allowing the first and the second UE to perform a side-link beam sweep for establishing the side-link beam pair may comprise a set of resource elements that the first and the second UE may use to establish the beam pair, such as to perform the side-link beam sweep. The set of resources may comprise L sub-blocks each sub-block comprising K resource elements. In one example, the information allowing the first and the second UE to perform the side-link beam sweep may comprise information indicating that the number of sub-blocks is L=9, i.e. that nine sub-blocks have been granted for performing the side-link beam sweep for setting up the side-link communication between the first and the second UE. The UEs may receive information on how the UEs are to use the granted resources, e.g. how many transmit beams the UEs may use to transmit in the resources of the granted sub-blocks. This may however also be up to the UE to decide. The UE may e.g. determine to transmit using three transmit beams and thus that the nine granted sub-blocks shall be shared by the three transmit beams. In a scenario where nine resources are shared by three transmit beams, each transmit beam may be repeated N times, wherein in this example N=3. Consequently, in this example, there are nine sub-blocks available and each beam is repeated three times, thus the first UE may use L/N=3 transmit beams (Tx1 - Tx3). Since N=3, the second UE may choose to listen to the transmit beams (Tx1-Tx3) from the first UE with L/N=3 receive beams (Rx1 - Rx3).

In addition, the first UE may also receive a conditional grant of resources for the side-link communication from the network node. The conditional grant allows the first and second UE to coordinate the side-link communication and to (autonomously) set up the side-link communication if the condition is fulfilled. The condition may e.g. indicate under what circumstances the UEs are allowed to establish the side-link, e.g. that the UEs may set up the side-link if the interference experienced by the other wireless nodes is below a threshold.

The method 3000 comprises performing S303 the side-link beam sweep, using one or more transmit beams, in the resources received from the network node.

The method 3000 comprises monitoring S305 for one or more responses, received via respective response beams, from the second UE. The response beams are beams transmitted in response to the one or more transmit beams of the beam sweep. The response beams may e.g. be received from the second UE as a beam sweep after the first UE has completed its beam sweep. The response beams may however also be received in direct response to each of the beams transmitted from the first UE.

The method 3000 comprises upon detecting one or more responses from the second UE, determining S309 one or more candidate beam pairs intended for side-link communication, based on the detected response on one or more response beams.

The method 3000 may in some exemplary embodiments comprise sending S311, to the network node, an indication of the one or more candidate beam pairs intended for the side-link communication.

In one or more example methods, the method 3000 may further comprise monitoring S307 for interference information indicating interference experienced by one or more wireless nodes being bystander to the side-link communication due to transmission over at least one beam of the one or more beam pairs intended for side-link communication. The monitoring may be performed by listening for a message from the one or more other wireless nodes indicating an experienced interference. The interference information may be transmitted from the other wireless nodes to the first or second UE using a Sidelink Control Information (SCI) message over e.g. a Physical Sidelink Control Channel (PSCCH) or a Physical Sidelink Shared Channel (PSSCH). Hence, the first UE may monitor the PSCCH or the PSSCH for a message indicating experienced interference from the other wireless nodes. This also corresponds to the monitoring for interference information by the second UE described herein.

In one or more example methods, the determining S309 may, upon detecting that the one or more other wireless nodes experience interference, further comprise determining S309A the one or more candidate beam pairs intended for side-link communication further based on the detected interference experienced by the one or more wireless nodes.

In one or more example methods, the method 3000 may comprise determining S308, based on the interference information, whether the interference experienced by the one or more wireless nodes is below a threshold.

In one or more example methods, upon determining that the interference experienced is below the threshold, the determining S309A may comprise determining S309B to set up the side-link communication with the one or more candidate beam pairs intended for side-link communication.

In one or more example methods, upon determining that the interference experienced is not below the threshold, the determining S309A may comprise determining S309C to discard one or more of the candidate beam pairs intended for side-link communication.

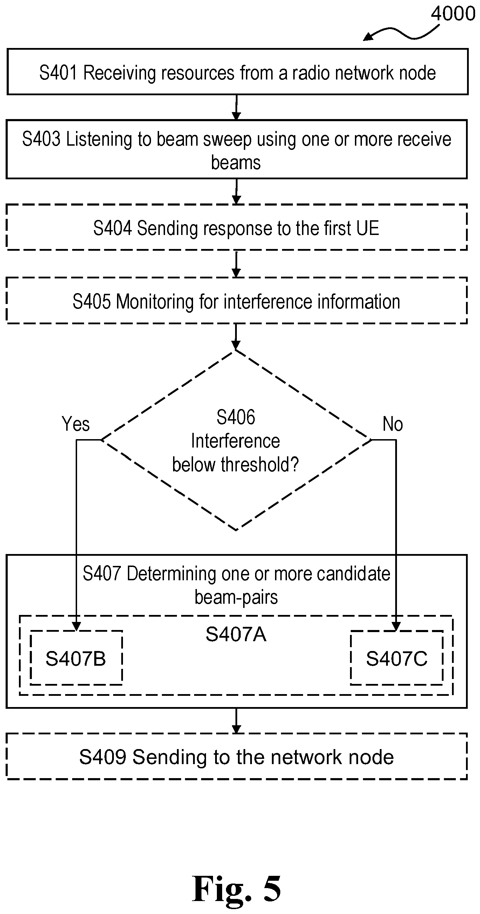

Fig. 5 is a flow-chart illustrating an exemplary method 4000, performed in a second UE, for interference coordination for side-link communication between the second UE and a first UE according to this disclosure. The method 4000 comprises receiving S401, from a radio network node, information allowing the first and the second UE to perform a side-link beam sweep for establishing the side-link beam pair in certain resources. The information allowing the first and the second UE to perform a side-link beam sweep for establishing the side-link beam pair may comprise a set of resource elements that the first and the second UE may use to establish the beam pair, such as to perform the side-link beam sweep. The set of resources may comprise L sub-blocks each sub-block comprising K resource elements. In one example, the information allowing the first and the second UE to perform the side-link beam sweep may comprise information indicating that the number of sub-blocks is L=9, i.e. that nine sub-blocks have been granted for performing the side-link beam sweep for setting up the side-link communication between the first and the second UE. The UEs may receive information on how the UEs are to use the granted resources, e.g. how many transmit beams the UEs may use to transmit in the resources of the granted sub-blocks. This may however also be up to the UEs to decide. The UE transmitting the beam sweep, in this example the first UE, may e.g. determine to transmit using three transmit beams. In a scenario where nine resources are shared by three transmit beams, each transmit beam may be repeated N times, wherein in this example N=3. Consequently, in this example, there are three transmit beams (Tx1 - Tx3). Since N=3, the receiving UE, in this example the second UE, may choose to listen with L/N=3 receive beams (Rx1 - Rx3).

In addition, the first UE may also receive a conditional grant of resources for the side-link communication from the network node. The conditional grant allows the first and second UE to coordinate the side-link communication and to (autonomously) set up the side-link communication if the condition is fulfilled. The condition may e.g. indicate under what circumstances the UEs are allowed to establish the side-link, e.g. that the UEs may set up the side-link if the interference experienced by the other wireless nodes is below a threshold.

The method 4000 comprises listening S403, using one or more receive beams, to a side-link beam sweep from the first UE, based on the received information.

The method 4000 comprises determining S407 one or more candidate beam pairs for the side-link communication. The one or more candidate beam pairs may be determined by measuring a signal strength, such as RSRP or a SINR, for each receive beam and selecting the beams having the highest signal strength.

In one or more example methods, the method 4000 may comprise sending S404, to the first UE, a response to each of the beams received from the first UE during the side-link beam sweep over a potential response beam. In one or more example methods, the sending S404 the response comprises performing a beam sweep in response to the beam sweep performed by the first UE.

In one or more example methods, the method 4000 may comprise monitoring S405 for interference information indicating interference experienced by one or more wireless nodes due to a transmission over at least one beam of the one or more beam pairs intended for side-link communication, wherein the wireless nodes are bystanders to the side-link communication.

In one or more example methods, upon detecting that the one or more wireless nodes experience interference, the determining S407 may further comprise determining S407A the beam pair intended for side-link communication further based on the detected interference experienced by the one or more wireless nodes. The second network node may e.g. select the beam pair which has the highest signal power or signal quality without exceeding the threshold for the interference for the one or more other wireless devices. In some embodiments a beam pair may be selected with a limited transmission power, wherein the power is reduced until the interference experienced by the other wireless devices is below the predetermined threshold.

In one or more example methods, the method 4000 may comprise determining S406, based on the interference information, whether the interference experienced by the one or more wireless nodes is below a threshold.

In one or more example methods, upon determining that the interference experienced is below the threshold, the determining S407A may comprise determining S407B to set up the side-link communication with the one or more candidate beam pairs intended for side-link communication.

In one or more example methods, upon determining that the interference experienced is not below the threshold, the scheduling S407A may comprise determining S407C to discard one or more of the candidate beam pairs intended for side-link communication.

In one or more example methods, the method 4000 may comprise sending S409, to the radio network node, an indication of the candidate beam pairs determined for the side-link communication.

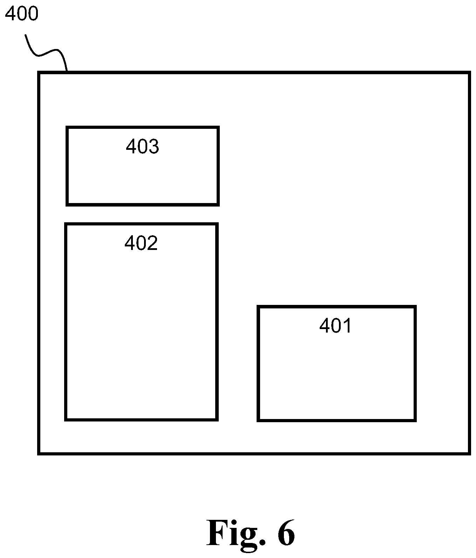

Fig. 6 shows a block diagram of an exemplary network node 400 according to the disclosure. The network node 400 comprises a memory circuitry 401, a processor circuitry 402, and a wireless interface 403. The network node 400 may be configured to perform any of the methods disclosed in Fig. 2. In other words, the network node 400 may be configured for interference coordination for side-link communication between a first and a second UE.

The network node 400 is configured to communicate with a user equipment, such as the user equipment disclosed herein, using a wireless communication system.

The wireless interface 403 is configured for wireless communications via a wireless communication system, such as a 3GPP system, such as a 3GPP system supporting millimetre-wave communications, such as millimetre-wave communications in licensed bands, such as device-to-device millimetre-wave communications in licensed bands.

The network node 400 is configured to send, e.g. via the wireless interface 403, to the first and second UE, information allowing the first and the second UE to perform a side-link beam sweep for establishing a side-link beam pair in a set of resources.

The network node 400 is configured to send, e.g. via the wireless interface 403, to other wireless nodes in the network, wherein the other wireless nodes are bystanders to the side-link communication, information indicating that a potentially interfering transmission is to occur in the set of resources. The set of resources is the set of resources indicated in the information allowing the first and second UEs to perform the side-link beam sweep for establishing the side-link beam pair.

The network node 400 is configured to receive, e.g. via the wireless interface 403, from the first and/or the second UE, beam pair information indicative of one or more beam pairs intended for side-link communication between the first and the second UE.

The network node 400 is configured to monitor, e.g. using the processor circuitry 402 and/or wireless interface 403, for interference information indicating a level of interference experienced by one or more of the other wireless nodes due to transmission over at least one beam of the one or more beam pairs intended for side-link communication.

The network node 400 is configured to schedule, e.g. using the processor circuitry 402, resources for the side-link communication based on the monitored interference information

The processor circuitry 402 is optionally configured to perform any of the operations disclosed in Fig. 2 (such as any one or more of S108, S109A, S109B, S109C, S109D, S109E, S100) and/or in relation to the wireless node disclosed herein. The operations of the network node 400 may be embodied in the form of executable logic routines (e.g., lines of code, software programs, etc.) that are stored on a non-transitory computer readable medium (e.g., the memory circuitry 401) and are executed by the processor circuitry 402).

Furthermore, the operations of the network node 400 may be considered a method that the network node 400 is configured to carry out. Also, while the described functions and operations may be implemented in software, such functionality may as well be carried out via dedicated hardware or firmware, or some combination of hardware, firmware and/or software.

The memory circuitry 401 may be one or more of a buffer, a flash memory, a hard drive, a removable media, a volatile memory, a non-volatile memory, a random access memory (RAM), or other suitable device. In a typical arrangement, the memory circuitry 401 may include a non-volatile memory for long term data storage and a volatile memory that functions as system memory for the processor circuitry 402. The memory circuitry 401 may exchange data with the processor circuitry 402 over a data bus. Control lines and an address bus between the memory circuitry 401 and the processor circuitry 402 also may be present (not shown in Fig. 6). The memory circuitry 401 is considered a non-transitory computer readable medium.

The memory circuitry 401 may be configured to store beam pair information in a part of the memory.

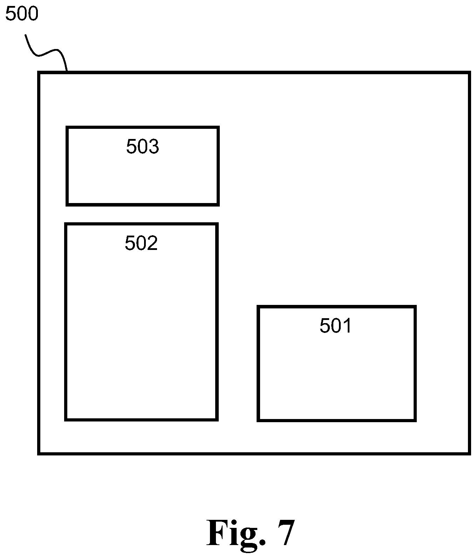

Fig. 7 shows a block diagram of an exemplary wireless node 500 according to the disclosure. The wireless node 500 comprises a memory circuitry 501, a processor circuitry 502, and a wireless interface 503. The wireless node 500 may be configured to perform any of the methods disclosed in Fig. 3. In other words, the wireless node 500 may be configured for enabling interference coordination for side-link communication between a first and a second UE.

In some embodiment, the wireless node 500 may act as a user equipment, the wireless node 500 is configured to communicate with a radio network node, and/or one or more other user equipment, such as user equipment disclosed herein, using a wireless communication system.

In some embodiment, the wireless node 500 may act as a radio network node, the wireless node 500 is configured to communicate with a network node disclosed herein, and/or one or more other user equipment, such as user equipment disclosed herein, using a wireless communication system.

The wireless interface 503 is configured for wireless communications via a wireless communication system, such as a 3GPP system, such as a 3GPP system supporting millimetre-wave communications, such as millimetre-wave communications in licensed bands, such as device-to-device millimetre-wave communications in licensed bands.

The wireless node 500 is configured to receive, via the wireless interface 503, from a radio network node, information indicating that a potentially interfering transmission is to occur in the set of resources. The information indicating the potentially interfering transmission optionally comprises time and/or frequency of the certain resource in which the potentially interfering transmission is to occur

The wireless node 500 is configured to measure (e.g. via the processor circuitry 502 and/or wireless interface 503) interference experienced from the set of resources indicated in the received information. Optionally, the set of resource elements comprises L sub-blocks, each sub-block comprising K resource elements.

The wireless node 500 is configured to, upon measuring interference in one or more of the indicated resources, send (e.g. via the wireless interface 503), to an entity coordinating the side-link communication, interference information indicating a level of interference experienced by the wireless node. Optionally, the interference information comprises an indication of the resources in which the interference occurred. Optionally, the entity coordinating the side-link communication is the radio network node, the first UE and/or the second UE.

The processor circuitry 502 is optionally configured to perform any of the operations disclosed in Fig. 3 and/or in relation to the wireless node disclosed herein. The operations of the wireless node 500 may be embodied in the form of executable logic routines (e.g., lines of code, software programs, etc.) that are stored on a non-transitory computer readable medium (e.g., the memory circuitry 501) and are executed by the processor circuitry 502).

Furthermore, the operations of the wireless node 500 may be considered a method that the wireless node 500 is configured to carry out. Also, while the described functions and operations may be implemented in software, such functionality may as well be carried out via dedicated hardware or firmware, or some combination of hardware, firmware and/or software.

The memory circuitry 501 may be one or more of a buffer, a flash memory, a hard drive, a removable media, a volatile memory, a non-volatile memory, a random access memory (RAM), or other suitable device. In a typical arrangement, the memory circuitry 501 may include a non-volatile memory for long term data storage and a volatile memory that functions as system memory for the processor circuitry 502. The memory circuitry 501 may exchange data with the processor circuitry 502 over a data bus. Control lines and an address bus between the memory circuitry 501 and the processor circuitry 502 also may be present (not shown in Fig. 7). The memory circuitry 501 is considered a non-transitory computer readable medium.

The memory circuitry 501 may be configured to store information indicating that a potentially interfering transmission is to occur in the set of resources in a part of the memory.

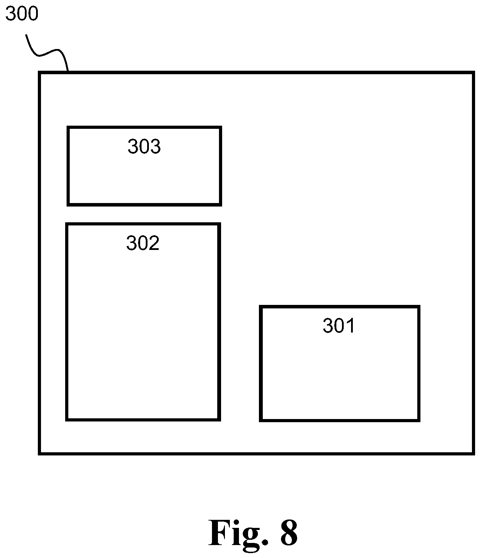

Fig. 8 shows a block diagram of an exemplary first user equipment 300 according to the disclosure. The first user equipment 300 comprises a memory circuitry 301, a processor circuitry 302, and a wireless interface 303. The first user equipment 300 may be configured to perform any of the methods disclosed in Fig. 4. In other words, the first user equipment 300 may be configured for enabling interference coordination for side-link communication between the first and a second UE.

The wireless interface 303 is configured for wireless communications via a wireless communication system, such as a 3GPP system, such as a 3GPP system supporting millimetre-wave communications, such as millimetre-wave communications in licensed bands, such as device-to-device millimetre-wave communications in licensed bands.

The first user equipment 300 is configured to receiving (e.g. via the wireless interface 303), from a radio network node, information allowing the first and the second UE to perform a side-link beam sweep for establishing a side-link beam pair in certain resources.

The first user equipment 300 is configured to perform (e.g. using the processor circuitry 302) a side-link beam sweep, using one or more transmit beams, in the resources received from the radio network node.

The first user equipment 300 is configured to monitor (e.g. via the processor circuitry 302 and/or the wireless interface 303) for one or more responses, received via respective response beams, from the second UE.

The first user equipment 300 is configured to, upon detecting one or more responses from the second UE, determine (e.g. using the processor circuitry 302) one or more candidate beam pairs intended for side-link communication, based on the detected response on one or more response beams.

The processor circuitry 302 is optionally configured to perform any of the operations disclosed in Fig. 4 (S307, S308, S309A, S309B, S309C, S311) and/or in relation to the first UE disclosed herein. The operations of the first user equipment 300 may be embodied in the form of executable logic routines (e.g., lines of code, software programs, etc.) that are stored on a non-transitory computer readable medium (e.g., the memory circuitry 301) and are executed by the processor circuitry 302).

Furthermore, the operations of the first user equipment 300 may be considered a method that the first user equipment 300 is configured to carry out. Also, while the described functions and operations may be implemented in software, such functionality may as well be carried out via dedicated hardware or firmware, or some combination of hardware, firmware and/or software.

The memory circuitry 301 may be one or more of a buffer, a flash memory, a hard drive, a removable media, a volatile memory, a non-volatile memory, a random access memory (RAM), or other suitable device. In a typical arrangement, the memory circuitry 301 may include a non-volatile memory for long term data storage and a volatile memory that functions as system memory for the processor circuitry 302. The memory circuitry 301 may exchange data with the processor circuitry 302 over a data bus. Control lines and an address bus between the memory circuitry 301 and the processor circuitry 302 also may be present (not shown in Fig. 8). The memory circuitry 301 is considered a non-transitory computer readable medium.

The memory circuitry 301 may be configured to store information allowing the first and the second UE to perform a side-link beam sweep for establishing a side-link beam pair in certain resources in a part of the memory.

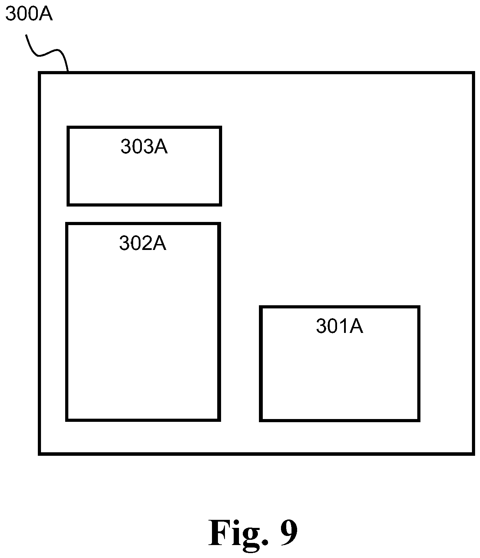

Fig. 9 shows a block diagram of an exemplary second user equipment 300A according to the disclosure. The second user equipment 300A comprises a memory circuitry 301A, a processor circuitry 302A, and a wireless interface 303A. The second user equipment 300A may be configured to perform any of the methods disclosed in Fig. 5. In other words, the second user equipment 300A may be configured for enabling interference coordination for side-link communication between a first and the second UE.

The wireless interface 303A is configured for wireless communications via a wireless communication system, such as a 3GPP system, such as a 3GPP system supporting millimetre-wave communications, such as millimetre-wave communications in licensed bands, such as device-to-device millimetre-wave communications in licensed bands.

The second user equipment 300A is configured to receiving (e.g. via the wireless interface 303A), from a radio network node, information allowing the first and the second UE to perform a side-link beam sweep for establishing a side-link beam pair in certain resources.

The second user equipment 300A is configured to listen (e.g. using the processor circuitry 302A and/or the wireless interface 303A) using one or more receive beams, to a side-link beam sweep from the first UE, based on the received information.

The second user equipment 300A is configured to determine (e.g. via the processor circuitry 302A) one or more candidate beam pairs for the side-link communication.

The processor circuitry 302A is optionally configured to perform any of the operations disclosed in Fig. 5 (S404, S405, S407A, S407B, S407C, S409) and/or in relation to the second UE disclosed herein. The operations of the second user equipment 300A may be embodied in the form of executable logic routines (e.g., lines of code, software programs, etc.) that are stored on a non-transitory computer readable medium (e.g., the memory circuitry 301A) and are executed by the processor circuitry 302A).

Furthermore, the operations of the second user equipment 300A may be considered a method that the second user equipment 300A is configured to carry out. Also, while the described functions and operations may be implemented in software, such functionality may as well be carried out via dedicated hardware or firmware, or some combination of hardware, firmware and/or software.

The memory circuitry 301A may be one or more of a buffer, a flash memory, a hard drive, a removable media, a volatile memory, a non-volatile memory, a random access memory (RAM), or other suitable device. In a typical arrangement, the memory circuitry 301A may include a non-volatile memory for long term data storage and a volatile memory that functions as system memory for the processor circuitry 302A. The memory circuitry 301A may exchange data with the processor circuitry 302A over a data bus. Control lines and an address bus between the memory circuitry 301A and the processor circuitry 302A also may be present (not shown in Fig. 9). The memory circuitry 301A is considered a non-transitory computer readable medium.

The memory circuitry 301A may be configured to store information allowing the first and the second UE to perform a side-link beam sweep for establishing a side-link beam pair in certain resources in a part of the memory.

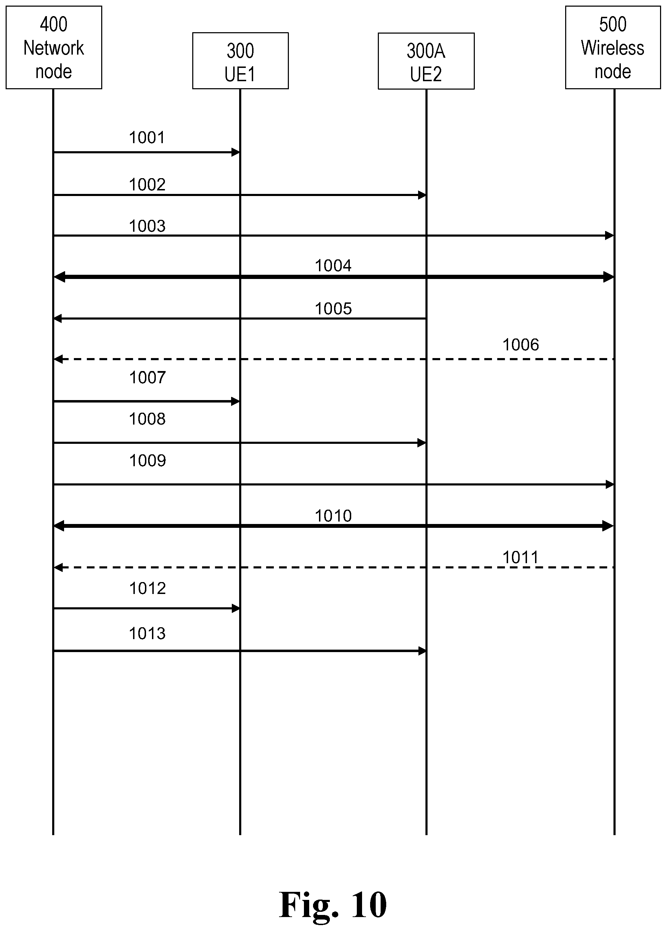

Figure 10 is a signaling diagram 1000 illustrating a first exemplary message exchange between an exemplary network node 400, such as a gNB, an exemplary wireless device 500 being a bystander to the side-link communication, such as a gNB and/or a UE, an exemplary first UE 300 and an exemplary second UE 300, during an exemplary procedure for setting up a side-link communication between the first and the second UE 300, 300A. In the example shown in Fig. 10, the network node is the entity coordinating the side-link communication.

The network node grants 1000 a set of resources, such as a set of REs, that the first and second UE may use to establish the beam pair for the side-link communication. The set of resources may comprise K*L REs. These K*L REs are divided into L sub-blocks, each one of size K. The network node may further define a synchronization in time frequency domain.

The network node informs 1001, 1002 the first and the second UE about the set of resources granted for the side-link transmission. The information about the resources may comprise the number of sub-blocks L and the REs in which the signalling is to take place.

When the network node allocates the K*L REs to the first and second UE, it also provides 1003 other wireless nodes, such as UEs and/or radio network nodes (e.g. gNBs), that may experience interference from the side-link communication, with the set of resources, e.g. comprising the number of sub-blocks L and the REs, in which the interference of the transmissions from the first and the second UEs may arise.

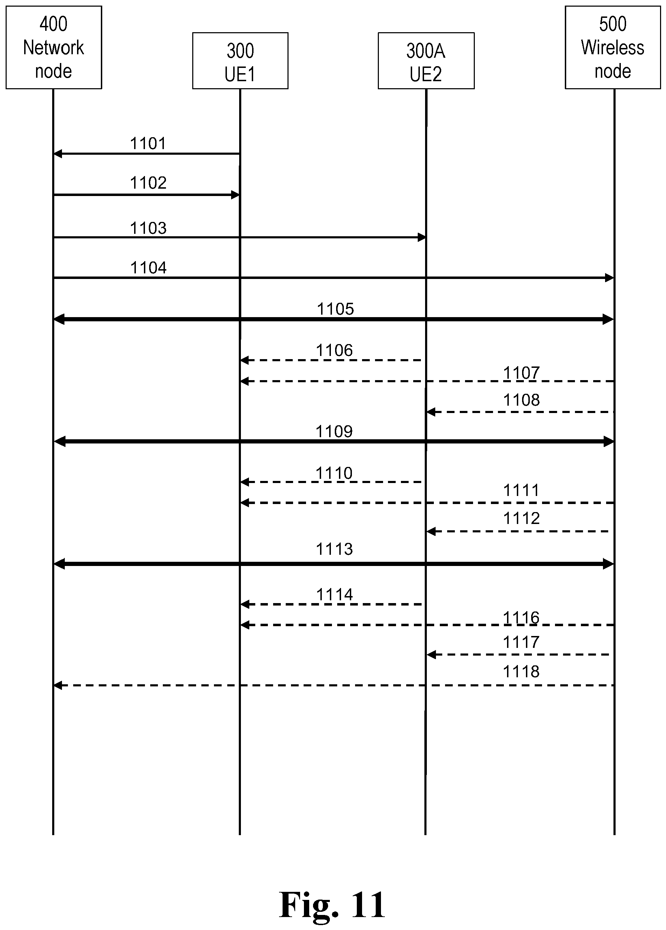

The first UE performs 1004 a beam sweep, such as a side-link beam sweep, by transmitting its beams in the set of resources, such as in the L different sub-blocks, granted by the network node. In Figs. 10 and 11, beam sweeps are indicated by double headed and wider arrows. The beam sweep is broadcasted in the communications network. Each of the beams may comprise a synchronization signal and a sounding reference signal and therefore may occupy K REs. The same beam may be repeated in N multiple sub-blocks. Preferably, N>1 for the system to work well. Hence, the first UE may use L/N different beams during the beam sweep. According to an exemplary embodiment herein, the network node may dictate how the beam allocation is to be done and informs the first and/or the second UE.

The second UE listens to the beam sweep from the first UE. In each of the L sub-blocks, the second UE may select a particular beam to listen with, which may also be referred to as selecting a receive beam. The same receive beam may be used for listening to the beams transmitted from the first UE in multiple sub-blocks.

Preferably, the second UE may listen with N different beams in the N sub-blocks where the first UE transmits with the same beam. The second UE may be informed by the first UE or the network node about the N sub-blocks in which the same beam of the first UE is transmitted in order for the second UE to measure with different beams on each of these sub blocks. This ensures that all beam pair combinations of transmit beam from the first UE and receive beam from the second UE are measured in order to determine the most suitable beam pair for the side-link communication.

The other wireless nodes, such as other UEs and/or other gNBs, measure interference during the beam sweep of the first UE.

The second UE reports 1005, to the network node, one or more candidate beam pairs for the side-link communication. The candidate beam pairs for the side-link communication may e.g. be the beam pairs via which the second UE receives the strongest signal, e.g., based on RSRP or SINR. The beam pairs may e.g. be reported to the network node by sending the M sub-blocks that correspond to the preferred beam pairs, since each sub-block corresponds to and/or represents one candidate beam pair. The network node may relay this information to the first UE. The second UE may e.g. report the beams by sending information indicative of the one or more beam pairs for side-link communication.

The information indicative of the one or more beam pairs may comprise an indication of the beam pair, an amount of data transmitted over the side-link and/or a power request for the side-link.

Once the second UE has informed the network node about the M sub-blocks where the best beams are transmitted, the network node obtains 1006 interference information from the other wireless nodes in said sub-blocks. The other wireless nodes may, upon detection of interference from the beam sweep, send the interference information to the network node. The interference information may e.g. comprise a level of interference experienced by the other wireless nodes, and/or the resources, such as the sub-blocks in which the interference is experienced. The interference information may be sent only if interference is experienced. The interference information may in some embodiments only be sent when the experienced interference is above a predetermined level.

If the obtained interference information is below a threshold for a subset M' of the M sub-blocks (M'>0) for all of the other wireless nodes, the network node may inform 1007 the first and the second UE about the M' sub-blocks. The threshold may be set individually by each wireless node depending on their traffic. M' herein represents a subset of the M sub-blocks where transmissions from the first UE will not cause too much interference to the other wireless nodes. The network node may further grant 1008 the second UE resources for transmission in M' new sub-blocks and may also inform 1009 the other wireless nodes about the location of these M' sub-blocks.

The second UE performs 1010 a beam sweep, e.g. by transmitting one or more potential response beams, such as M' potential response beams. The beam sweep is broadcasted in the communications network. Each response beam may be associated with one of the received beams in the candidate beam pairs. The association may e.g. be based on an approximate beam correspondence. Beam correspondence at the first UE may hold if at least one of the following is satisfied:
- The first UE is able to determine a receive beam for the side-link reception from the second UE based on the second UE's side-link measurement on the first UEs one or more transmit beams, or
- The first UE is able to determine a transmit beam for the transmission to the second UE based on the first UEs side-link measurement on one or more receive beams of the first UE.

Beam correspondence at the second UE may hold if at least one of the following is satisfied:
- The second UE is able to determine a transmit beam for the side-link transmission to the first UE based on the second UE's side-link measurement on the second UE's one or more receive beams, or
- The second UE is able to determine a receive beam for a side-link reception from the first UE based on the first UE's indication based on side-link measurement on the second UE's one or more transmit beams.

The received beam which the one or more potential response beams are associated with may be one or more preferred beam(s) transmitted from the first UE in the M' sub-blocks that don't cause interference exceeding a certain threshold at the other wireless nodes.

The first UE and/or the other wireless devices measure on the transmission from the second UE in these M' sub-blocks and reports 1011 the experienced interference to the network node. The measurements may be RSRP or SINR. The first UE may use the measurement to determine what beams are good, and may be a candidate for the beam pair, and the other wireless nodes may use the measurement to determine if the transmission from the second UE causes interference.

If the interference experienced by the other nodes from the transmissions from the second UE below a threshold, the network node grants side-link communication between the first and the second UE using the best beam pair of the candidate beam pairs not causing interference over a certain threshold at the other wireless nodes. The side-link communication is granted by sending 1012 the resource grant to the first UE and sending 1013 the resource grant to the second UE. The network node considers the interference caused by both the transmissions from the first UE and the transmissions from the second UE, from the beams represented by the L sub-blocks.

Fig. 11 is a signaling diagram 1100 illustrating a second exemplary message exchange between an exemplary network node 400, such as a gNB, an exemplary wireless device 500 being a bystander to the side-link communication, such as a gNB and/or a UE, an exemplary first UE 300 and an exemplary second UE 300, during an exemplary procedure for setting up a side-link communication between the first and the second UE 300, 300A. In the example shown in Fig. 11, the first and/or the second UE is the entity coordinating the side-link communication. Instead of performing the complete beam sweep and then receiving a response to the complete beam sweep as in the exemplary method disclosed in Fig. 10, the first UE may allocate associated response resources for the second UE for each individual transmit beam of the first UE during the side-link beam sweep. The associated response resources may be allocated between the resources allocated for one beam of the side-link beam sweep of the first UE and a subsequent beam of the side-link beam sweep of the first UE. There may also be dedicated associated resources for the other wireless nodes to directly indicate if they sense interference to the first UE and/or the second UE, in which case the interference does not need to be shared with the network node since the coordination of the side-link communication is done by the UEs, such as the first and/or the second UE. This may however require that both UEs have beam correspondence.

The network node may receive 1101 a request for resources for establishing a side-link operation from the first UE. The network node may however also initiate the side-link communication by requesting the UEs to perform a beam sweep on its own volition, i.e. without receiving a request from the first and/or the second UE.

The network node grants a set of resources, such as a set of REs, that the first and second UE may use to establish the beam pair for the side-link communication. The set of resources may comprise K*L REs. These K*L REs are divided into L sub-blocks, each one of size K. The network node may further define a synchronization in the time and frequency domain.

The network node informs 1102, 1103 the first and the second UE about the set of resources granted for the side-link transmission. The information may comprise the number of sub-blocks L and the REs in which the signalling is to take place. In addition to the information sent in step 1001 and 1002 of the exemplary embodiment of Fig. 10, the network node may also provide a conditional grant to the first and second UEs. The conditional grant allows the first and second UE to coordinate the side-link communication and to (autonomously) set up the side-link communication if a condition is fulfilled. The condition may e.g. indicate under what circumstances they are indeed allowed to establish a side-link, e.g. that the UEs may set up the side-link if the interference experienced by the other wireless nodes is below a threshold.

When the network node allocates the set of resources to the first and second UE, it also provides 1104 the other wireless nodes that may experience interference from the side-link communication, with the set of resources in which the interference of the transmissions from the first and the second UEs may arise. This step 1104 corresponds to step 1003 of Fig. 10, step S103 of Fig. 2, and Step 201 of Fig. 3.

The first UE performs 1105 a beam sweep, such as a side-link beam sweep, by transmitting a first beam in a first resource out of the set of resources granted by the network node. The beam sweep is broadcasted in the communications network. The beam may comprise the synchronization signal and the sounding reference signal. The first UE may determine the transmit beam allocation in the set of resources granted for the beam sweep. The first UE allocates response resources for the second UE associated with each individual transmit beam of the first UE during the side-link beam sweep. The associated response resources may be allocated between the individual beams of the side-link beam sweep of the first UE. The first UE may transmit beams in predefined slots of the L blocks and monitor predefined slots in which the first UE expects a response if the second UE was able to hear the beams from the first UE. The first UE may further dedicate associated resources for the other wireless nodes to directly indicate if they sense interference from the transmissions of the first and the second UE. This step 1105 is similar to step 1004 of Fig. 10 and S303 in Fig. 4.

The second UE listens to a first beam of the beam sweep from the first UE, and in a subsequent resource, transmits 1106 a response beam in response to the received beam. The other wireless nodes measure the interference from the transmission of the first and second. This step is similar to step S403 and S404 of Fig. 5 and is similar to step 1005 in Fig. 10.

The other wireless nodes, such as other UEs and/or other network nodes (such as base stations e.g. gNBs), measure interference during the beam sweep of the first UE and the response beam of the second UE. This step corresponds to step S203 of Fig. 3.

The other wireless nodes may, upon detection of interference from the beam transmitted from the first UE and the response beam transmitted from the second UE, send 1107, 1108 the interference information to the first and/or the second UE. The interference may be detected based on the measurement performed during the beam sweep. If the measurement indicates a level of interference, then an interference may be considered as detected. The interference information may e.g. comprise a level of interference experienced by the other wireless nodes, and/or the resources, such as the sub-blocks in which the interference is experienced. The interference information may be sent only if interference is experienced. The interference information may in some embodiments only be sent when the experienced interference is above a certain level. This step corresponds to step S205 of Fig. 3 and is similar to step 1006 of Fig. 10.

The first UE then continues to perform 1109 the beam sweep by transmitting a second beam in a second resource out of the set of resources granted by the network node. The beam sweep is broadcasted in the communications network. This step 1105 is similar to step 1004 of Fig. 10 and S303 in Fig. 4.

The second UE listens to the second beam of the beam sweep from the first UE, and in a subsequent resource, transmits 1110 a response beam in response to the received second beam. The other wireless nodes measure the interference from the transmission of the first and second.

The other wireless nodes, such as other UEs and/or other network nodes (e.g. gNBs), measure interference during the beam sweep of the first UE and the response beam of the second UE. This step is similar to step S403 and S404 of Fig. 5 and is similar to step 1005 in Fig. 10.

The other wireless nodes may, upon detection of interference from the beam transmitted from the first UE and the response beam transmitted from the second UE, send 1111, 1112 the interference information to the first and/or the second UE.

The method then repeats itself until all transmit beams have been measured and corresponding responses have been sent. The first UE continues to perform 1113 the beam sweep by transmitting the next beam out of the set of transmit beams in a resource out of the set of resources granted by the network node until transmit beams have been transmitted in all resources granted by the network node. The beam sweep is broadcasted in the communications network. This step 1105 is similar to step 1004 of Fig. 10 and S303 in Fig. 4.

The second UE listens to the transmit beams of the beam sweep from the first UE, and in subsequent resources, transmits 1114 a response beam in response to the received second beam. The first UE may measure on the response beam(s) and may determine the best beam pair based on the measurements. This step is similar to step S403 and S404 of Fig. 5 and is similar to step 1005 in Fig. 10.

The other wireless nodes, such as other UEs and/or other gNBs, measure interference during the beam sweep of the first UE and the response beam of the second UE.

The other wireless nodes may, upon detection of interference from the beam transmitted from the first UE and the response beam transmitted from the second UE, send 1116, 1117 the interference information to the first and/or the second UE.

The other wireless nodes may in some embodiments also send 1118 the interference information to the network node.

The interference information may comprise a level of interference which the other wireless nodes can accept. This reported level may be used as the threshold for interference.

In some embodiments the first UE may determine the resources to be used for the side-link communication based on the conditional grant. If the interference experienced by the other wireless devices is below the threshold, the first UE may determine to set up 1122 a side-link with the second UE on the resources conditionally granted by the network node. In some embodiment s the network node may set up the side-link communication with the second UE with a limit on the maximum transmit power in the side-ink in order to reduce the interference caused to the other wireless nodes.

Embodiments of methods and products (network node, wireless nodes and first and second UE) according to the disclosure are set out in the following items:
Item 1. A method, performed by a network node, for interference coordination for side-link communication between a first and a second User Equipment, UE, the method comprising:
   - sending (S101), to the first and second UE, information allowing the first and the second UE to perform a side-link beam sweep for establishing a side-link beam pair in a set of resources,
   - sending (S103), to other wireless nodes in the network, wherein the other wireless nodes are bystanders to the side-link communication, information indicating that a potentially interfering transmission is to occur in the set of,
   - receiving (S105), from the first and/or the second UE, beam pair information indicative of one or more beam pairs intended for side-link communication between the first and the second UE,
   - monitoring (S107) for interference information indicating a level of interference experienced by one or more of the other wireless nodes due to transmission over at least one beam of the one or more beam pairs intended for side-link communication, and
   - scheduling (S109) resources for the side-link communication based on the monitored interference information.
Item 2. The method according to item 1, wherein the method comprises,
   upon detecting interference information:
   - determining (S108), based on the interference information, whether the interference experienced is below a threshold
Item 3. The method according to item 2, wherein, upon determining that the interference experienced is below the threshold, the scheduling (S109) comprises:
   - allocating (S109A) resources to the first and second UE for side-link communication with the beam pairs intended for side-link communication.
Item 4. The method according to any of items 2-3, wherein, upon determining that the interference experienced is not below the threshold, the scheduling (S109) comprises:
   - refraining (S109B) from allocating resources for the beam pairs intended for side-link communication.
Item 5. The method according to item 4, wherein the refraining (S109B) further comprises sending (S109C), to the first and the second UE, information allowing the first and the second UE to perform a side-link beam sweep for establishing a side-link beam pair in a different set of resources.
Item 6. The method according to any of items 2-5, wherein, upon determining that the interference experienced is not below the threshold, the scheduling (S109) comprises:
   - determining (S109D), based on the interference information, a maximum transmit power allowable for the side-link,
   - granting (S109E) resources for the side-link communication under the condition that the maximum transmit power is not exceeded.
Item 7. The method according to any of the previous items, wherein the information indicative of one or more beam pairs for side-link communication comprises an indication of the beam pair, and/or a power request for the side-link.
Item 8. The method according to any of the previous items, wherein the method comprises:
   - receiving (S100), from the first and/or the second UE, a request for establishing a side-link beam pair.
Item 9. The method according to any of the previous items, wherein the information allowing the first and the second UE to perform a side-link beam sweep for establishing the side-link beam pair comprises a set of resource elements that the first and the second UE may use to establish the beam pair.
Item 10. The method according to item 9, wherein the set of resources comprises L sub-blocks each sub-block comprising K resource elements.
Item 11. The method according to item 9 or 910, wherein the information allowing the first and the second UE to perform a side-link beam sweep for establishing the side-link beam pair further comprises a conditional resource grant for side-link communication, wherein the conditional resource grant indicates that the resource is granted for side-link communication for beam pairs for which the interference experienced by the other wireless nodes is below a predetermined threshold.
Item 12. A method, performed in a wireless node, for enabling interference coordination for side-link communication between a first and a second User Equipment, UE, wherein the first and the second UE are to perform a side-link beam sweep in a set of resources, wherein the wireless node is a bystander to the side-link communication, the method comprising:
   - receiving (S201), from a radio network node, information indicating that a potentially interfering transmission is to occur in the set of resources,
   - measuring (S203) interference experienced from the set of resources indicated in the received information, and
      upon measuring interference in one or more of the indicated resources
   - sending (S205), to an entity coordinating the side-link communication, interference information indicating a level of interference experienced by the wireless node.
Item 13. The method according to item 12, wherein the information indicating the potentially interfering transmission comprises time and/or frequency of the set of resources in which the potentially interfering transmission is to occur.
Item 14. The method according to any of the items 12-13, wherein the information indicating that a potentially interfering transmission will occur comprises a set of resource elements.
Item 15. The method according to any of the previous items 12-14, wherein the set of resource elements comprises L sub-blocks, each sub-block comprising K resource elements.
Item 16. The method according to any of the previous items 12-15, wherein the interference information comprises an indication of the resources in which the interference occurred.
Item 17. The method according to any of the items 12-16, wherein the entity coordinating the side-link communication is the radio network node, the first UE and/or the second UE.
Item 18. A method, performed in a first User Equipment, UE, for interference coordination for side-link communication between the first and a second UE, the method comprising:
   - receiving (S301), from a radio network node, information allowing the first and the second UE to perform a side-link beam sweep for establishing a side-link beam pair in a set of resources,
   - performing (S303) a side-link beam sweep, using one or more transmit beams, in the resources received from the radio network node,
   - monitoring (S305) for one or more responses, received via respective response beams, from the second UE,
      upon detecting one or more responses from the second UE,
   - determining (S309) one or more candidate beam pairs intended for side-link communication, based on the detected response on one or more response beams.
Item 19. The method according to item 18, wherein the method further comprises:
   - monitoring (S307) for interference information indicating interference experienced by one or more wireless nodes being bystander to the side-link communication due to transmission over at least one beam of the one or more beam pairs intended for side-link communication, and
   upon detecting that the one or more other wireless nodes experience interference, the determining (S309) further comprises:
   - determining (S309A) the one or more candidate beam pairs intended for side-link communication further based on the detected interference experienced by the one or more wireless nodes.
Item 20. The method according to item 19, wherein the method comprises:
   - determining (S308), based on the interference information, whether the interference experienced by the one or more wireless nodes is below a threshold.
Item 21. The method according to item 20, wherein, upon determining that the interference experienced is below the threshold, the determining (S309A) comprises:
   - determining (S309B) to set up the side-link communication with the one or more candidate beam pairs intended for side-link communication.
Item 22. The method according to any of items 20-21, wherein, upon determining that the interference experienced is not below the threshold, the determining (S309A) comprises:
   - determining (S309C) to discard one or more of the candidate beam pairs intended for side-link communication.
Item 23. A method, performed in a second User Equipment, UE, for interference coordination for side-link communication between the second UE and a first UE, the method comprising:
   - receiving (S401), from a radio network node, information allowing the first and the second UE to perform a side-link beam sweep for establishing the side-link beam pair in a set of resources,
   - listening (S403), using one or more receive beams, to a side-link beam sweep from the first UE, based on the received information;
   - determining (S407) one or more candidate beam pairs for the side-link communication.
Item 24. The method according to item 23, the method comprising:
   - sending (S404), to the first UE, a response to each of the beams received from the first UE during the side-link beam sweep over a potential response beam.
Item 25. The method according to item 24, the method comprising:
   - monitoring (S405) for interference information indicating interference experienced by one or more wireless nodes due to a transmission over at least one beam of the one or more beam pairs intended for side-link communication, wherein the wireless nodes are bystanders to the side-link communication, and
   upon detecting that the one or more wireless nodes experience interference, the determining (S407) further comprises:
   - determining (S479A) the beam pair intended for side-link communication further based on the detected interference experienced by the one or more wireless nodes.
Item 26. The method according to item 25, wherein the method comprises:
   - determining (S406), based on the interference information, whether the interference experienced by the one or more wireless nodes is below a threshold.
Item 27. The method according to item 26, wherein, upon determining that the interference experienced is below the threshold, the determining (S407A) comprises:
   - determining (S407B) to set up the side-link communication with the one or more candidate beam pairs intended for side-link communication.
Item 28. The method according to any of items 26-27, wherein, upon determining that the interference experienced is not below the threshold, the scheduling (S407A) comprises:
   - determining (S407C) to discard one or more of the candidate beam pairs intended for side-link communication.
Item 29. The method according to any of the items 25 to 27, wherein the method comprises:
   - sending (S409), to the radio network node, an indication of the candidate beam pairs determined for the side-link communication.
Item 30. A network node comprising a memory module, a processor module, and a wireless interface, wherein the network node is configured to perform any of the methods according to any of items 1-11.
Item 31. A wireless node comprising a memory module, a processor module, and a wireless interface, wherein the wireless node is configured to perform any of the methods according to any of items 12-17.
Item 32. A first user equipment, UE, comprising a memory module, a processor module, and a wireless interface, wherein the first user equipment is configured to perform any of the methods according to any of items 18-22.
Item 33. A second user equipment, UE, comprising a memory module, a processor module, and a wireless interface, wherein the second user equipment is configured to perform any of the methods according to any of items 23-28.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that Figs. 1-11 comprises some circuitries or operations which are illustrated with a solid line and some circuitries or operations which are illustrated with a dashed line. The circuitries or operations which are comprised in a solid line are circuitries or operations which are comprised in the broadest example embodiment. The circuitries or operations which are comprised in a dashed line are example embodiments which may be comprised in, or a part of, or are further circuitries or operations which may be taken in addition to the circuitries or operations of the solid line example embodiments. It should be appreciated that these operations need not be performed in order presented. Furthermore, it should be appreciated that not all of the operations need to be performed. The exemplary operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly to be regarded in an illustrative rather than restrictive sense.

## Claims

1. A method, performed by a network node, for interference coordination for side-link communication between a first and a second User Equipment, UE, the method comprising:
• sending (S101), to the first and second UE, information allowing the first and the second UE to perform a side-link beam sweep for establishing a side-link beam pair in a set of resources,
• sending (S103), to other wireless nodes in the network, wherein the other wireless nodes are bystanders to the side-link communication, information indicating that a potentially interfering transmission is to occur in the set of resources,
• receiving (S105), from the first and/or the second UE, beam pair information indicative of one or more beam pairs intended for side-link communication between the first and the second UE,
• monitoring (S107) for interference information indicating a level of interference experienced by one or more of the other wireless nodes due to transmission over at least one beam of the one or more beam pairs intended for side-link communication, and
• scheduling (S109) resources for the side-link communication based on the monitored interference information.

2. The method according to claim 1, wherein the method comprises,
upon detecting interference information:
• determining (S108), based on the interference information, whether the interference experienced is below a threshold.

3. The method according to claim 2, wherein, upon determining that the interference experienced is not below the threshold, the scheduling (S109) comprises:
• determining (S109D), based on the interference information, a maximum transmit power allowable for the side-link,
• granting (S109E) resources for the side-link communication under the condition that the maximum transmit power is not exceeded.

4. The method according to any one of the previous claims, wherein the information allowing the first and the second UE to perform a side-link beam sweep for establishing the side-link beam pair comprises a set of resource elements that the first and the second UE may use to establish the beam pair.

5. The method according to claim 4, wherein the information allowing the first and the second UE to perform a side-link beam sweep for establishing the side-link beam pair comprises a conditional resource grant for side-link communication, wherein the conditional resource grant indicates that the resource is granted for side-link communication for beam pairs for which the interference experienced by the other wireless nodes is below a predetermined threshold.

6. A method, performed in a wireless node, for enabling interference coordination for side-link communication between a first and a second User Equipment, UE, wherein the first and the second UE are to perform a side-link beam sweep in a set of resources, wherein the wireless node is a bystander to the side-link communication, the method comprising:
• receiving (S201), from a radio network node, information indicating that a potentially interfering transmission is to occur in the set of resources,
• measuring (S203) interference experienced from the set of resources indicated in the received information, and
upon measuring interference in one or more of the indicated resources
• sending (S205), to an entity coordinating the side-link communication, interference information indicating a level of interference experienced by the wireless node.

7. The method according to claim 6, wherein the information indicating the potentially interfering transmission comprises time and/or frequency of the set of resources in which the potentially interfering transmission is to occur.

8. The method according to any one of the claims 6 to 7, wherein the interference information comprises an indication of the resources in which the interference occurred.

9. A method, performed in a first User Equipment, UE, for interference coordination for side-link communication between the first and a second UE, the method comprising:
• receiving (S301), from a radio network node, information allowing the first and the second UE to perform a side-link beam sweep for establishing a side-link beam pair in a set of resources,
• performing (S303) a side-link beam sweep, using one or more transmit beams, in the resources received from the radio network node,
• monitoring (S305) for one or more responses, received via respective response beams, from the second UE,
upon detecting one or more responses from the second UE,
• determining (S309) one or more candidate beam pairs intended for side-link communication, based on the detected response on one or more response beams.

10. The method according to claim 9, wherein the method further comprises:
• monitoring (S307) for interference information indicating interference experienced by one or more wireless nodes being bystander to the side-link communication due to transmission over at least one beam of the one or more beam pairs intended for side-link communication, and
upon detecting that the one or more other wireless nodes experience interference, the determining (S309) further comprises:
• determining (S309A) the one or more candidate beam pairs intended for side-link communication further based on the detected interference experienced by the one or more wireless nodes.

11. The method according to claim 10, wherein the method comprises:
• determining (S308), based on the interference information, whether the interference experienced by the one or more wireless nodes is below a threshold.

12. The method according to claim 11, wherein, upon determining that the interference experienced is below the threshold, the determining (S309A) comprises:
• determining (S309B) to set up the side-link communication with the one or more candidate beam pairs intended for side-link communication.

13. A method, performed in a second User Equipment, UE, for interference coordination for side-link communication between the second UE and a first UE, the method comprising:
• receiving (S401), from a radio network node, information allowing the first and the second UE to perform a side-link beam sweep for establishing the side-link beam pair in a set of resources,
• listening (S403), using one or more receive beams, to a side-link beam sweep from the first UE, based on the received information;
• determining (S407) one or more candidate beam pairs for the side-link communication.

14. A network node comprising a memory module, a processor module, and a wireless interface, wherein the network node is configured to perform any of the methods according to any of claims 1 to 5.

15. A wireless node comprising a memory module, a processor module, and a wireless interface, wherein the wireless node is configured to perform any of the methods according to any of claims 6-8.

## Patentansprüche

1. Verfahren, das durch einen Netzwerkknoten durchgeführt wird, für eine Störungskoordination für eine Sidelink-Kommunikation zwischen einem ersten und einem zweiten Benutzergerät (User Equipment, UE), wobei das Verfahren umfasst:
• Senden (S101), zu dem ersten und dem zweiten UE, von Informationen, die dem ersten und dem zweiten UE erlauben, einen Sidelink-Strahlschwenk zum Einrichten eines Sidelink-Strahlenpaars in einer Gruppe von Ressourcen durchzuführen,
• Senden (S103), zu anderen drahtlosen Knoten in dem Netzwerk, von Informationen, die anzeigen, dass in der Gruppe von Ressourcen eine potenziell störende Übertragung auftritt, wobei die anderen drahtlosen Knoten Beobachter der Sidelink-Kommunikation sind,
• Empfangen (S105), von dem ersten und/oder dem zweiten UE, von Strahlenpaarinformationen, die ein oder mehrere Strahlenpaare anzeigen, die für die Sidelink-Kommunikation zwischen dem ersten und dem zweiten UE vorgesehen sind,
• Überwachen (S107) von Störungsinformationen, die ein Störungsniveau anzeigen, das von einem oder mehreren der anderen drahtlosen Knoten aufgrund einer Übertragung über mindestens einen Strahl des einen oder der mehreren Strahlenpaare wahrgenommen wird, die für die Sidelink-Kommunikation vorgesehen sind, und
• Planen (S109) von Ressourcen für die Sidelink-Kommunikation basierend auf den überwachten Störungsinformationen.

2. Verfahren nach Anspruch 1, wobei das Verfahren, nach dem Erkennen der Störungsinformationen umfasst:
• Ermitteln (S108), basierend auf den Störungsinformationen, ob die wahrgenommene Störung unter einem Schwellenwert liegt.

3. Verfahren nach Anspruch 2, wobei das Planen (S109), nach dem Ermitteln, dass die wahrgenommene Störung nicht unter dem Schwellenwert liegt, umfasst:
• Ermitteln (S109D), basierend auf den Störungsinformationen, einer zulässigen maximalen Übertragungsleistung für den Sidelink,
• Erteilen (S109E) von Ressourcen für die Sidelink-Kommunikation unter der Bedingung, dass die maximale Übertragungsleistung nicht überschritten wird.

4. Verfahren nach einem der vorhergehenden Ansprüche, wobei die Informationen, die dem ersten und dem zweiten UE erlauben, einen Sidelink-Strahlschwenk zum Einrichten des Sidelink-Strahlenpaars durchzuführen, eine Gruppe von Ressourcenelementen umfassen, die von dem ersten und dem zweiten UE verwendet werden können, um das Strahlenpaar einzurichten.

5. Verfahren nach Anspruch 4, wobei die Informationen, die dem ersten und dem zweiten UE erlauben, einen Sidelink-Strahlschwenk zum Einrichten des Sidelink-Strahlenpaars durchzuführen, eine bedingte Ressourcenerteilung für die Sidelink-Kommunikation umfassen, wobei die bedingte Ressourcenerteilung anzeigt, dass die Ressource für eine Sidelink-Kommunikation für Strahlenpaare erteilt wird, für welche die durch die anderen drahtlosen Knoten wahrgenommene Störung unter einen vorbestimmten Schwellenwert liegt.

6. Verfahren, das in einem drahtlosen Knoten durchgeführt wird, zum Ermöglichen einer Störungskoordination für eine Sidelink-Kommunikation zwischen einem ersten und einem zweiten Benutzergerät (User Equipment, UE), wobei das erste und das zweite UE geeignet sind, um einen Sidelink-Strahlschwenk in einer Gruppe von Ressourcen durchzuführen, wobei der drahtlose Knoten ein Beobachter der Sidelink-Kommunikation ist, wobei das Verfahren umfasst:
• Empfangen (S201), von einem Funknetzwerkknoten, von Informationen, die anzeigen, dass eine potenziell störende Übertragung in der Gruppe von Ressourcen auftritt,
• Messen (S203) einer Störung, die von einer Gruppe von Ressourcen wahrgenommen wird und die in den empfangenen Informationen angezeigt wird, und
nach dem Messen einer Störung in einer oder mehreren der angezeigten Ressourcen:
• Senden (S205), zu einer Einrichtung, welche die Sidelink-Kommunikation koordiniert, von Störungsinformationen, die ein Störungsniveau anzeigen, das von dem drahtlosen Knoten wahrgenommen wird.

7. Verfahren nach Anspruch 6, wobei die Informationen, welche die potenziell störende Übertragung anzeigen, eine Zeit und/oder eine Frequenz der Gruppe von Ressourcen anzeigen, in denen die potenziell störende Übertragung auftritt.

8. Verfahren nach einem der Ansprüche 6 bis 7, wobei die Störungsinformationen eine Anzeige der Ressourcen umfassen, in denen die Störung aufgetreten ist.

9. Verfahren, das in einem ersten Benutzergerät (User Equipment, UE) durchgeführt wird, für eine Störungskoordination für eine Sidelink-Kommunikation zwischen einem ersten und einem zweiten UE, wobei das Verfahren umfasst:
• Empfangen (S301), von einem Funknetzwerkknoten, von Informationen, die dem ersten und dem zweiten UE erlauben, einen Sidelink-Strahlschwenk zum Einrichten eines Sidelink-Strahlenpaars in einer Gruppe von Ressourcen durchzuführen,
• Durchführen (S303) eines Sidelink-Strahlschwenks unter Verwendung eines oder mehrerer Sendestrahlen in den Ressourcen, die von dem Funknetzwerkknoten empfangen werden,
• Überwachen (S305) von einer oder mehreren Antworten, die über entsprechende Antwortstrahlen von dem zweiten UE empfangen werden,
nach dem Erkennen einer oder mehrerer Antworten von dem zweiten UE:
• Ermitteln (S309) von einem oder mehreren Kandidatenstrahlenpaaren, die basierend auf der erkannten Antwort auf einem oder mehreren Antwortstrahlen für eine Sidelink-Kommunikation vorgesehen sind.

10. Verfahren nach Anspruch 9, wobei das Verfahren außerdem umfasst:
• Überwachen (S§07) von Störungsinformationen, die eine Störung anzeigen, die von einem oder mehreren der anderen drahtlosen Knoten, die Beobachter der Sidelink-Kommunikation sind, aufgrund einer Übertragung über mindestens einen Strahl des einen oder der mehreren Strahlenpaare wahrgenommen wird, die für die Sidelink-Kommunikation vorgesehen sind, und
wobei das Ermitteln (S309), nach dem Erkennen, dass der eine oder die mehreren drahtlosen Knoten eine Störung wahrgenommen haben, ferner umfasst:
• Ermitteln (S309A) des einen oder der mehreren Kandidatenstrahlenpaaren, die basierend auf der erkannten Störung, die von dem einen oder den mehreren drahtlosen Knoten wahrgenommen werden, für eine Sidelink-Kommunikation vorgesehen sind.

11. Verfahren nach Anspruch 10, wobei das Verfahren umfasst:
• Ermitteln (S308), basierend auf den Störungsinformationen, ob die von dem einen oder den mehreren drahtlosen Knoten wahrgenommene Störung unter einem Schwellenwert liegt.

12. Verfahren nach Anspruch 11, wobei das Ermitteln (S309A), nach dem Ermitteln, dass die wahrgenommene Störung unter dem Schwellenwert liegt, umfasst:
• Bestimmen (S309B), dass die Sidelink-Kommunikation mit dem einen oder den mehreren Kandidatenstrahlenpaaren eingerichtet wird, die für die Sidelink-Kommunikation vorgesehen sind.

13. Verfahren, das in einem zweiten Benutzergerät (User Equipment, UE) durchgeführt wird, für eine Störungskoordination für eine Sidelink-Kommunikation zwischen dem zweiten UE und einem ersten UE, wobei das Verfahren umfasst:
• Empfangen (S401), von einem Funknetzwerkknoten, von Informationen, die es dem ersten und dem zweiten UE erlauben, einen Sidelink-Strahlschwenk zum Einrichten eines Sidelink-Strahlenpaars in einer Gruppe von Ressourcen durchzuführen,
• Abhören (S403), unter Verwendung eines oder mehrerer Empfangsstrahlen, eines Sidelink-Strahlschwenks von dem ersten UE basierend auf den empfangenen Informationen;
• Ermitteln (S407) eines oder mehrerer Kandidatenstrahlenpaaren für die Sidelink-Kommunikation.

14. Netzwerkknoten, der ein Speichermodul, ein Prozessormodul und eine drahtlose Schnittstelle umfasst, wobei der Netzwerkknoten konfiguriert ist zum Durchführen eines der Verfahren nach einem der Ansprüche 1 bis 5.

15. Drahtloser Knoten, der ein Speichermodul, ein Prozessormodul und eine drahtlose Schnittstelle umfasst, wobei der drahtlose Knoten konfiguriert ist zum Durchführen eines der Verfahren nach einem der Ansprüche 6 bis 8.

## Revendications

1. Procédé, exécuté par un noeud de réseau, permettant une coordination d'interférence pour une communication de liaison latérale entre un premier et un deuxième équipement utilisateur, UE, le procédé comprenant :
. l'envoi (S101), au premier et au deuxième UE, d'informations permettant au premier et au deuxième UE d'exécuter un balayage de faisceaux de liaison latérale pour établir une paire de faisceaux de liaison latérale dans un ensemble de ressources,
. l'envoi (S103), à d'autres noeuds sans fil dans le réseau, dans lequel les autres noeuds sans fil sont des témoins de la communication de liaison latérale, d'informations indiquant qu'une transmission potentiellement interférente va se produire dans l'ensemble de ressources,
. la réception (S105), à partir du premier et/ou du deuxième UE, d'informations de paires de faisceaux indiquant une ou des paires de faisceaux prévues pour une communication de liaison latérale entre le premier et le deuxième UE,
. la surveillance (S107) pour des informations d'interférence indiquant un niveau d'interférence rencontré par un ou plusieurs des autres noeuds sans fil en raison d'une transmission sur au moins un faisceau de l'une ou des paires de faisceaux prévues pour une communication de liaison latérale, et
. la planification (S109) de ressources pour la communication de liaison latérale sur la base des informations d'interférence surveillées.

2. Procédé selon la revendication 1, dans lequel le procédé comprend, lors de la détection d'informations d'interférence :
. la détermination (5108), sur la base des informations d'interférence, pour savoir si l'interférence rencontrée se situe sous un seuil.

3. Procédé selon la revendication 2, dans lequel, lors de la détermination que l'interférence rencontrée ne se situe pas sous le seuil, la planification (S109) comprend :
. la détermination (S109D), sur la base des informations d'interférence, d'une puissance de transmission maximum pouvant être autorisée pour la liaison latérale,
. l'attribution (S109E) de ressources pour la communication de liaison latérale à condition que la puissance de transmission maximum ne soit pas dépassée.

4. Procédé selon l'une quelconque des revendications précédentes, dans lequel les informations autorisant le premier et le deuxième UE à exécuter un balayage de faisceaux de liaison latérale pour établir la paire de faisceaux de liaison latérale comprennent un ensemble d'éléments de ressources que le premier et le deuxième UE peuvent utiliser pour établir la paire de faisceaux.

5. Procédé selon la revendication 4, dans lequel les informations permettant au premier et au deuxième UE d'exécuter un balayage de faisceaux de liaison latérale pour établir la paire de faisceaux de liaison latérale comprennent une attribution de ressources conditionnelle pour une communication de liaison latérale, dans lequel l'attribution de ressources conditionnelle indique que la ressource est attribuée pour une communication de liaison latérale pour des paires de faisceaux pour lesquelles l'interférence rencontrée par les autres noeuds sans fil se situe sous un seuil prédéterminé.

6. Procédé, exécuté dans un noeud sans fil, permettant d'activer une coordination d'interférence pour une communication de liaison latérale entre un premier et un deuxième équipement utilisateur, UE, dans lequel le premier et le deuxième UE doivent exécuter un balayage de faisceaux de liaison latérale dans un ensemble de ressources, dans lequel le noeud sans fil est un témoin de la communication de liaison latérale, le procédé comprend :
. la réception (S201), à partir d'un noeud de réseau radio, d'informations indiquant qu'une transmission potentiellement interférente va se produire dans l'ensemble de ressources,
. la mesure (S203) d'une interférence rencontrée à partir de l'ensemble de ressources indiqué dans les informations reçues, et
lors de la mesure d'une interférence dans une ou plusieurs des ressources indiquées
. l'envoi (S205), à une entité coordonnant la communication de liaison latérale, d'informations d'interférence indiquant un niveau d'interférence rencontré par le noeud sans fil.

7. Procédé selon la revendication 6, dans lequel les informations indiquant la transmission potentiellement interférente comprennent un temps et/ou une fréquence de l'ensemble de ressources dans lequel la transmission potentiellement interférente va se produire.

8. Procédé selon l'une quelconque des revendications 6 à 7, dans lequel les informations d'interférence comprennent une indication des ressources dans lesquelles l'interférence s'est produite.

9. Procédé, exécuté dans un premier équipement utilisateur, UE, permettant une coordination d'interférence pour une communication de liaison latérale entre le premier et un deuxième UE, le procédé comprenant :
. la réception (S301), à partir d'un noeud de réseau radio, d'informations permettant au premier et au deuxième UE d'exécuter un balayage de faisceaux de liaison latérale pour établir une paire de faisceaux de liaison latérale dans un ensemble de ressources,
. l'exécution (S303) d'un balayage de faisceaux de liaison latérale, en utilisant un ou des faisceaux de transmission, dans les ressources reçues à partir du noeud de réseau radio,
. la surveillance (S305) d'une ou des réponses, reçues via des faisceaux de réponse respectifs, à partir du deuxième UE,
lors de la détection d'une ou des réponses à partir du deuxième UE,
. la détermination (S309) d'une ou des paires de faisceaux candidates prévues pour une communication de liaison latérale, sur la base de la réponse détectée sur un ou des faisceaux de réponse.

10. Procédé selon la revendication 9, dans lequel le procédé comprend en outre :
. la surveillance (S307) d'informations d'interférence indiquant une interférence rencontrée par un ou des noeuds sans fil qui sont témoins de la communication de liaison latérale en raison d'une transmission sur au moins un faisceau de l'une ou des paires de faisceaux prévues pour une communication de liaison latérale, et
lors de la détection que l'un ou les autres noeuds sans fil rencontrent une interférence, la détermination (S309) comprend en outre :
. la détermination (S309A) de l'une ou des paires de faisceaux candidates prévues pour une communication de liaison latérale sur la base en outre de l'interférence détectée rencontrée par le ou les noeuds sans fil.

11. Procédé selon la revendication 10, dans lequel le procédé comprend :
. la détermination (S308), sur la base d'informations d'interférence, pour savoir si l'interférence rencontrée par le ou les noeuds sans fil se situe sous un seuil.

12. Procédé selon la revendication 11, dans lequel, lors de la détermination que l'interférence rencontrée se situe sous le seuil, la détermination (S309A) comprend :
. la détermination (S309B) d'établir la communication de liaison latérale avec l'une ou les paires de faisceaux candidates prévues pour une communication de liaison latérale.

13. Procédé, exécuté dans un deuxième équipement utilisateur, UE, permettant une coordination d'interférence pour une communication de liaison latérale entre le deuxième UE et un premier UE, le procédé comprenant :
. la réception (S401), à partir d'un noeud de réseau radio, d'informations permettant au premier et au deuxième UE d'exécuter un balayage de faisceaux de liaison latérale pour établir la paire de faisceaux de liaison latérale dans un ensemble de ressources,
. l'écoute (S403), en utilisant un ou des faisceaux de réception, d'un balayage de faisceaux de liaison latérale à partir du premier UE, sur la base des informations reçues ;
. la détermination (S407) d'une ou des paires de faisceaux candidates pour la communication de liaison latérale.

14. Noeud de réseau comprenant un module de mémoire, un module de processeur et une interface sans fil, dans lequel le noeud de réseau est configuré pour exécuter l'un quelconque des procédés selon l'une quelconque des revendications 1 à 5.

15. Noeud sans fil comprenant un module de mémoire, un module de processeur et une interface sans fil, dans lequel le noeud de réseau est configuré pour exécuter l'un quelconque des procédés selon l'une quelconque des revendications 6 à 8.
